# EUROPÄISCHE PATENTSCHRIFT

(11) **EP 2 884 199 B1**
(45) Veröffentlichungstag und Bekanntmachung des Hinweises auf die Patenterteilung: **23.11.2016**
(21) Anmeldenummer: 13005818.3
(22) Anmeldetag: 13.12.2013
(51) Int. Cl.: F24H 1/00, F24H 1/12, F24H 9/18, F28F 3/12

(54) **Elektrische Heizvorrichtung**
Electric heating device
Dispositif de chauffage électrique

(43) Veröffentlichungstag der Anmeldung: 17.06.2015
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE); Sutter, Ulrich, Dr., 76829 Landau i.d. Pfalz (DE)
(74) Vertreter: Grünecker Patent- und Rechtsanwälte PartG mbB

(56) Entgegenhaltungen:
- EP-A1- 2 440 004
- WO-A1-2011/086909
- WO-A2-2005/041627
- CN-U- 202 993 568

## Beschreibung

Die vorliegende Erfindung betrifft eine elektrische Heizvorrichtung, insbesondere zur Erwärmung von flüssigen Temperiermedien in einem Kraftfahrzeug, gemäß dem Obergriff des Anspruchs 1. Eine solche elektrische Heizvorrichtung ist aus der CN 202 993 568 U bekannt. Die vorliegende Erfindung betrifft insbesondere einen so genannten "Coolant Heater", d.h. eine elektrische Heizvorrichtung zur Erwärmung eines flüssigen Temperiermediums, welches technische Aggregate in einem Kraftfahrzeug erwärmt, d.h. Teil eines Temperiermediumkreislaufs ist, der neben der elektrischen Heizvorrichtung üblicherweise Wärmetauschflächen zwischen dem Temperiermediumkreislauf und zumindest einer Oberfläche eines technischen Aggregates umfasst. Bei diesem technischen Aggregat kann es sich um den Motorblock eines Verbrennungsmotors handeln. Die vorliegende Erfindung hat aber hat aber insbesondere die Verwendung der elektrischen Heizvorrichtung im Rahmen der Elektromobilität im Blick. So wird in einer Einbausituation der erfindungsgemäßen elektrischen Heizvorrichtung insbesondere Wärme mit der Oberfläche einer Batterie getauscht, die mit Hilfe der von der elektrischen Heizvorrichtung erzeugten Wärme erwärmt wird. Hierin liegt der Hauptanwendungsfall der erfindungsgemäßen elektrischen Heizvorrichtung.

Die vorliegende Erfindung geht des Weiteren von einer elektrischen Heizvorrichtung aus, die aus der auf die Anmelderin zurückgehenden EP 2 440 004 A1 bekannt ist. Diese elektrische Heizvorrichtung hat ein Gehäuse mit Rohranschlüssen, wobei ein Rohranschluss auch bei der erfindungsgemäßen Heizvorrichtung als Einlass und der andere Rohranschluss als Auslass für das zu erwärmende Temperiermedium ausgebildet ist. Das Gehäuse umschließt eine Zirkulationskammer für das Temperiermedium. In diese Zirkulationskammer ragen Heizrippen hinein, die jeweils mit einer U-förmigen Ausnehmung versehen sind. Diese U-förmigen Ausnehmungen öffnen sich zu einer einheitlichen Anschlusskammer, die von der Zirkulationskammer durch eine im Bereich der offenen Enden der U-förmigen Ausnehmungen vorgesehene Trennwand getrennt ist. Dadurch ergibt sich eine sichere Trennung zwischen der das Temperiermedium führenden Zirkulationskammer und der elektrische Anschlüsse und Leitungsbahnen hierzu aufnehmenden Anschlusskammer.

Bei dem zuvor erwähnten Stand der Technik erstrecken sich die Heizrippen im Wesentlichen in einer Y-Z-Richtung, die jeweils bei dem üblichen Aufbau des vorbekannten Heizers mit einer ebenen geradlinig verlaufenden Trennwand orthogonal zu derjenigen Ebene verläuft, in der sich die Trennwand erstreckt. Die Heizrippen sind im Wesentlichen plattenförmig in einer orthogonal zu der Y-Z-Ebene verlaufenden X-Achsenrichtung hintereinander vorgesehen. Sie sind beim Stand der Technik versetzt zueinander und alternierend wandnah angeordnet. Bei dem zuvor erwähnten Stand der Technik ragen die Heizrippen jeweils von gegenüberliegenden Längsseitenwänden in die Zirkulationskammer hinein, so dass sich die Strömung in der Zirkulationskammer an der der entsprechenden Längsseitenwand gegenüberliegenden freien Stirnseite der Heizrippe umgelenkt wird. Dadurch ergibt sich innerhalb der Zirkulationskammer ein mäandrierender Strömungskanal, der dafür Sorge trägt, dass die durch die Heizrippen gebildete Begrenzungsfläche zu der Zirkulationskammer möglichst vollständig von dem zu erwärmenden Temperiermedium umströmt wird.

Insofern begründet bereits der zuvor diskutierte Stand der Technik eine Verbesserung gegenüber früheren Vorschlägen, beispielsweise gemäß EP 1 921 896 A1 bzw. US 1,529,200 aus dem Jahr 1925, bei welchen das Medium lediglich parallel zu den Heizrippen von einem Strömungseinlass zu einen Strömungsauslass geleitet wird. Bei diesen Lösungen erstrecken sich die Heizrippen nicht quer, sondern längs zu derjenigen Strömungsrichtung, mit welcher die Strömung in das Gehäuse eingeleitet wird. Allerdings sind mehrere Rippen in dieser Ausrichtung nebeneinander vorgesehen, so dass sich eine Parallelschaltung von mehreren nebeneinander geordneten Strömungskanälen innerhalb der Zirkulationskammer ergibt.

Wenngleich die Ausbildung eines mäandrierenden Strömungskanals innerhalb der Zirkulationskammer die Wärmetauscherfläche und auch die Strömungsbedingungen so verändert, dass eine gute Wärmeübertragung möglich ist, bleibt Raum für Verbesserung.

Die vorliegende Erfindung will eine elektrische Heizvorrichtung der eingangs genannten Art schaffen, die bei kompaktem Aufbau eine hohe Wärmeleistung ermöglicht, wobei gleichzeitig auch dem Umstand Rechnung getragen werden soll, dass der Druckverlust innerhalb der Zirkulationskammer für das zu erwärmende Temperiermedium und dementsprechend der Pumpendruck und damit der Systemdruck innerhalb des Zirkulationssystems nicht allzu hoch über dem Atmosphärendruck eingestellt werden muss.

Zur Lösung dieser Aufgabe wird mit der vorliegenden Erfindung eine elektrische Heizvorrichtung mit den Merkmalen von Anspruch 1 vorgeschlagen. Gemäß der vorliegenden Erfindung bildet das Gehäuse wenigstens zwei Zirkulationskammern aus, die durch eine sich im Wesentlichen in der X-Z-Ebene erstreckende Abteilwand voneinander getrennt sind. Bei der bevorzugten Weiterbildung der vorliegenden Erfindung, bei welcher eine Gehäusewanne die Zirkulationskammer umgibt, ist diese Abteilwand üblicherweise einteilig an der spritzgegossenen Gehäusewanne ausgeformt. Die Abteilwand unterteilt die Zirkulationskammer in zumindest zwei sich parallel zueinander erstreckende Zirkulationsteilkammern, die üblicherweise jeweils mit Heizrippen versehen sind. Abhängig von dem gewünschten Wärmeintrag kann es indes möglich sein, eine der Zirkulationsteilkammern mit Heizrippen zu bestücken und die andere Teilkammer lediglich als Rückführweg für das erwärmte Temperiermedium zu einem der Rohranschlüsse zu nutzen. Die Teilkammern sind üblicherweise von einem einheitlichen Gehäusedeckel abgedeckt, der einteilig die Heizrippen ausformt.

Auch mit Blick auf die zuletzt genannte Weiterbildung ist es zu bevorzugen, das Gehäuse mit sich in X-Richtung erstreckenden und die Rohranschlüsse vorgebenden Anschlussstutzen zu versehen, die an der gleichen Seitenwand des Gehäuses angeordnet sind. Dabei kommt es insbesondere darauf an, dass sich die Rohranschlüsse an identischer Seitenwand des Gehäuseunterteils befinden. Sie werden üblicherweise einteilig durch das Gehäuseunterteil ausgeformt und sind dementsprechend aus Kunststoff ausgebildet mit Funktionsflächen zur Befestigung der Temperiermedium führenden Rohre an die elektrische Heizvorrichtung.

Gemäß einer weiteren bevorzugten Ausgestaltung der vorliegenden Erfindung weist die Abteilwand einen, vorzugsweise einen einzigen Strömungsdurchlass auf. Dieser ist an einer dem wenigstens einen Rohranschluss gegenüberliegenden Seite in der Abteilwand ausgespart. Gemäß der Weiterbildung befindet sich der Strömungsauslass benachbart zu einer derjenigen Wände, die die Zirkulationskammer umgibt. Es hat sich als vorteilhaft erwiesen, zur Erzeugung turbulenter Strömungen Rippen vorzusehen, die von den die Zirkulationskammer umgebenden Wänden abragen. So sollte auch gegenüberliegend der Abteilwand bei einer wandnahen Anordnung des Strömungsdurchlasses eine Rippe von der entsprechenden Seitenwand abragen, durch welche sich die Strömung von der zugeordneten Seitenwand ablöst. Bei dieser bevorzugten Ausgestaltung wird der Strömungsdurchlass daher im Grunde durch die zugeordnete Seitenwand begrenzt, allerdings durch die von dieser Seitenwand abragende Längsrippe geringfügig von der zugeordneten Seitenwand beabstandet ausgebildet. Dabei verläuft die Längsrippe üblicherweise durchgehen von dem Boden des Gehäuseunterteils bis zu der Trennwand.

Praktische Versuche haben ergeben, dass zwar die Hauptströmung in der Zirkulationskammer alternierend und dementsprechend stirnseitig zwischen der jeweiligen Heizrippe und der Seitenwand des Gehäuses dort zu erfolgen hat, wo die jeweilige Heizrippe einen größeren Durchlass zwischen sich und dem Gehäuse erlaubt als an der gegenüberliegenden Seite. Dabei können durchaus in einer Y-Z-Ebene mehrere Heizrippen parallel hintereinander vorgesehen sein, die den freien Strömungsdurchgang durch das Gehäuse in X-Richtung verhindern und der Hauptströmung einen alternierenden Strömungsweg aufzwingen. Bei der hier diskutierten bevorzugten Weiterbildung der vorliegenden Erfindung wird allerdings eine gewisse Bypassströmung auch an der gegenüberliegenden Seite zugelassen. Diese Bypassströmung entspricht üblicherweise nicht mehr als 10% des Volumenstromes der Hauptströmung an der gegenüberliegenden Stirnseite der Heizrippe. Mit anderen Worten wird lediglich ein geringer Teil der Strömung durch das Zirkulationsgehäuse als Bypassströmung in X-Richtung geführt. Hierzu ist zwischen einer die Zirkulationskammer begrenzenden Seitenwand des Gehäuses und der Heizrippe ein Spalt vorgesehen, der diese Bypassströmung erlaubt. Der Spalt ist - wie zuvor bereits erwähnt - gegenüberliegend zu dem Strömungskanal vorgesehen. Bei der hier diskutierten Weiterbildung ist die Heizrippe jeweils beidseitig zu den Seitenwänden des Gehäuses in Höhenrichtung ganz oder teilweise beabstandet vorgesehen. Üblicherweise ist im Wesentlichen über die gesamte Höhenerstreckung der Heizrippe ein Spalt geschaffen, der die Bypassströmung erlaubt, sowie an der gegenüberliegenden Seite ein im Vergleich dazu wesentlich größerer Zwischenraum für die Hauptströmung. Mithin werden beide Stirnseiten der Heizrippe umströmt. Dabei lässt sich die vorliegende Erfindung zu vorderst von der Vorstellung leiten, dass lediglich eine einzige Heizrippe den freien Strömungsweg in X-Richtung zwischen einander gegenüberliegenden und die Zirkulationskammer bzw. die Zirkulationsteilkammer begrenzenden Seitenwänden verlegt. Sofern mehrere Heizrippen in der Y-Z-Ebene fluchtend hintereinander vorgesehen sind, sollte zwischen benachbarten Heizrippen jeweils zumindest ein eine Bypassströmung erlaubender Spalt vorgesehen sein, so dass auch zwischen zwei benachbarten Heizrippen an den Stirnseiten Wärme an das zu erwärmende Temperiermedium abgeführt werden kann. Durch die zuvor beschriebenen Maßnahmen wird die Wärmeleistung der elektrischen Heizvorrichtung erhöht, ohne den Bauraum erheblich zu vergrößern. So ergibt sich eine elektrische Heizvorrichtung mit hoher Wärmeleistung und geringem Bauraum.

Gemäß einer bevorzugten Weiterbildung der vorliegenden Erfindung hat die Heizrippe und/oder wenigstens eine Längsseitenwand des Gehäuses, die die Zirkulationskammer begrenzt, an einer dem Strömungskanal gegenüberliegenden Seite einen Steg, der sich zwischen der Heizrippe und der Innenwand erstreckt. Der Steg befindet sich dementsprechend im Wesentlichen in Verlängerung der Heizrippe. Der Steg verläuft in der Vertikalen, d.h. in der Z-Richtung. Der Steg muss in dieser Richtung nicht notwendigerweise von der Trennwand bis zum Boden des Gehäuseunterteils durchgehend ausgebildet sein. Vielmehr kann der Steg auch lediglich teilweise über diese Höhenerstreckung vorgesehen sein. Darüber hinaus kann der die Bypassströmung erlaubende Spalt teilweise durch einen Steg begrenzt sein, der an der Seitenwand angeordnet und vorzugsweise einteilig durch das Gehäuseunterteil ausgeformt wird und teilweise durch einen Steg, der stirnseitig an der Heizrippe vorgesehen ist. Der Steg ist in X-Richtung, d.h. Breitenrichtung der Heizrippe üblicherweise wesentlich dünner als die Heizrippe selbst. Das Verhältnis von Breite der Heizrippe zu Breite des Stegs liegt dabei vorzugsweise bei zwischen 7:1 bis 20:1, bevorzugt bei zwischen 10:1 bis 15:1. So wird die Heizrippe stirnseitig durch den Steg nur geringfügig verdickt und damit der Wärmeleitungsweg vom Innern der Heizrippe nach außen nur geringfügig vergrößert. Auch erfolgt ein schonender Einsatz des die Heizrippe ausbildenden Materials. Der Steg kann endseitig spanend bearbeitet sein, um exakt das gewünschte Spaltmaß einzustellen. Mit Blick auf möglichst geringe Strömungswiderstände hat der Steg gekrümmte Seitenwände. Es werden Unstetigkeiten vermieden, so dass die Strömung möglichst ohne abrupte Abrisskanten durch das Zirkulationsgehäuse hindurchgeleitet wird. Diese Maßgabe gilt für möglichst alle geometrischen Gestaltungsdetails einerseits der die Zirkulationskammer umgebenden Wandungen einschließlich der Abteilwand und die Heizrippengestaltung andererseits.

Gemäß einer bevorzugten Weiterbildung der vorliegenden Erfindung hat das Gehäuseunterteil einen von dem Boden abgehenden Steg und die Heizrippe einen von der Trennwand abgehenden Steg. Diese beiden Stege begrenzen den in Höhenrichtung von dem Boden bis zur Trennwand üblicherweise durchgehend ausgebildeten Spalt der zugeordneten Heizrippe. Allerdings endet der von dem Boden abgehende Steg in etwa höhengleich mit dem von der Trennwand abgehenden Steg bevorzugt auf mittlerer Höhe der Zirkulationskammer. Üblicherweise wird zwischen den beiden Stegen eine Bypassströmung erlaubt.

Mit Blick auf eine weitere Verbesserung der Wärmeübergangsbedingungen an der Phasengrenzen zwischen der Heizrippe und der Zirkulationskammer wird gemäß einer weiteren bevorzugten Ausgestaltung der vorliegenden Erfindung zwischen einem freien Ende der Heizrippe und einem Boden des Gehäuseunterteils ein Bodenspalt ausgebildet, der eine Boden-Bypassströmung erlaubt. So wird die Heizrippe vorzugsweise allseitig von dem zu erwärmenden Temperiermedium umströmt. Mit Blick auf eine möglichst gute Wärmeabfuhr von der Oberfläche der Heizrippe ist zwischen benachbarten Heizrippen eine von dem Boden abragende Querrippe vorgesehen, die sich parallel zu den Heizrippen erstreckt. Diese Querrippe hat eine höhenmäßige Erstreckung, die üblicherweise das untere Ende der Heizrippe überragt. Mit anderen Worten ragt eine Heizrippe zwischen benachbarte Querrippen hinein und zwar tiefer als der höchste Punkt der entsprechenden Querrippen. Als höchster Punkt ist damit der höhenmäßige Abstand zwischen einer üblicherweise ebenen Bodenfläche und dem stirnseitigen Abstand der Querrippe zu verstehen. Das freie Ende der Querrippe verläuft üblicherweise parallel zu der ebenen Bodenfläche und ist ebenfalls eben.

Weitere Einzelheiten und Vorteile der vorliegenden Erfindung ergeben sich aus der nachfolgenden Beschreibung von zwei Ausführungsbeispielen in Verbindung mit der Zeichnung. In dieser zeigen:
- Figur 1: eine teilweise geschnittene perspektivische Seitendarstellung eines ersten Ausführungsbeispiels der vorliegenden Erfindung;
- Figur 2: eine Explosionsdarstellung des in Figur 1 gezeigten ersten Ausführungsbeispiels der vorliegenden Erfindung;
- Figur 3: eine in der X-Y-Ebene liegende Querschnittsansicht des ersten Ausführungsbeispiels von oben;
- Figur 4: eine in der X-Z-Ebene liegende Längsschnittsansicht des ersten Ausführungsbeispiels;
- Figur 5: eine in der Y-Z-Ebene liegende Querschnittsansicht des ersten Ausführungsbeispiels;
- Figur 6: eine perspektivische Darstellung einer in der X-Y-Ebene liegenden Längsschnittansicht von unten, d.h. auf einen Gehäusedeckel;
- Figur 7: eine perspektivische Seitenansicht auf ein Leistungsteil des Ausführungsbeispiels;
- Figur 8: ein vergrößertes Detail in einer Längsschnittansicht in der X-Y-Ebene von Leistungsteil und Steuerteil;
- Figur 9: eine perspektivische Draufsicht auf das offene Steuergehäuse vor dem Einbringen der Leiterplatte;
- Figur 10: eine perspektivische Draufsicht nach Figur 9 mit darin montierten Leistungstransistoren und weiteren, der Steuerleiterplatte zugeordneten Elementen innerhalb des Steuergehäuses;
- Figur 11: eine perspektivische Draufsicht gemäß den Figuren 9 und 10 nach Montage der Steuerleiterplatte; und
- Figur 12: eine perspektivische Explosionsdarstellung des Gehäuses für ein anderes Ausführungsbeispiel der vorliegenden Erfindung.

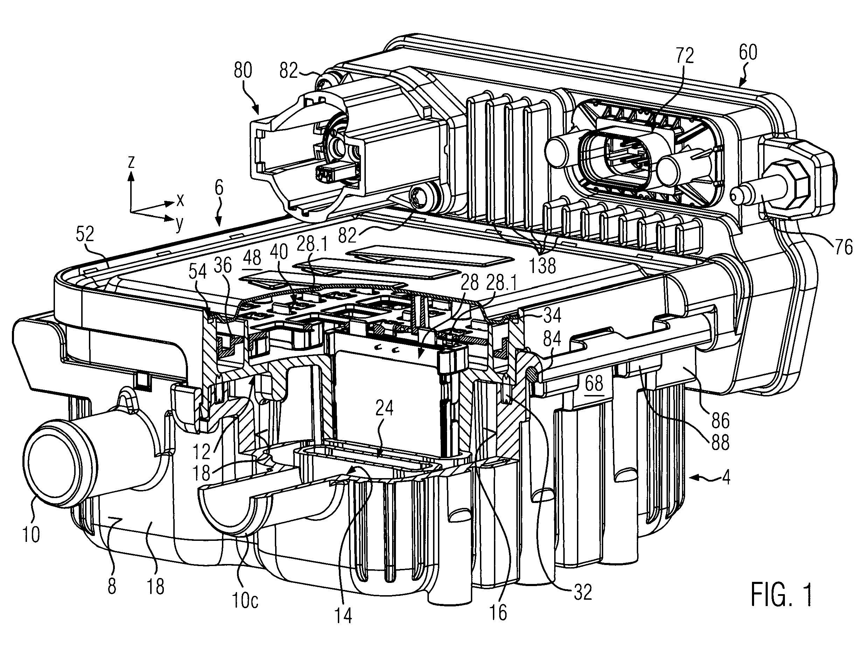

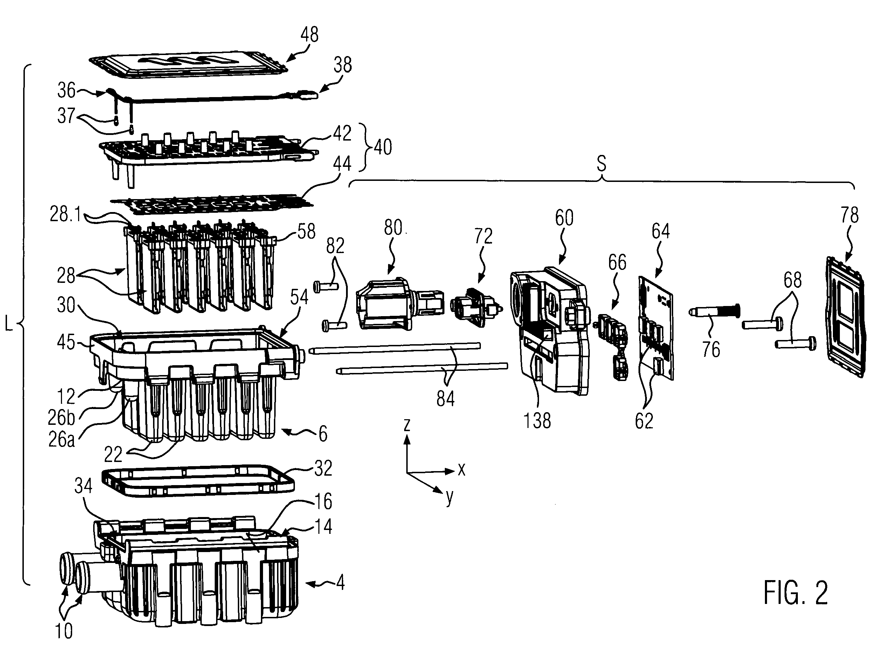

Die Figuren 1 und 2 lassen die wesentlichen Bestandteile des ersten Ausführungsbeispiels erkennen. Bei diesem Ausführungsbeispiel handelt es sich um eine elektrische Heizvorrichtung zur Temperierung eines flüssigen Temperiermediums, insbesondere einer Temperierflüssigkeit, die zu gleichen Teilen aus Wasser und Glykol besteht. Die elektrische Heizvorrichtung weist ein versiegeltes Gehäuse 2 mit einem als Kunststoff-Spritzgussteil ausgebildeten wannenförmigen Gehäuseunterteil 4 und einem dieses Gehäuseunterteil 4 dichtend abdeckenden Gehäusedeckel 6 auf. Von einer ersten Stirnseite 8 des Gehäuseunterteils 4 ragen zwei Anschlussstutzen 10 ab, welche einteilig an dem Gehäuseunterteil 4 ausgeformt sind und vorliegend die Rohranschlüsse des Ausführungsbeispiels ausbilden. Der Gehäusedeckel 6 definiert eine Trennwand 12, die oberseitig eine Zirkulationskammer 14 begrenzt, die im Übrigen durch Wandungen des Gehäuseunterteils 4 begrenzt wird, nämlich sich parallel zu den Anschlussstutzen 10 erstreckende Längsseitenwände 16 und sich rechtwinklig hierzu erstreckende Stirnseitenwände 18. Durch eine in Figur 1 erkennbare Abteilwand 20 wird die Zirkulationskammer 14 in zwei Zirkulations-Teilkammern 14a, 14b unterteilt.

Der Gehäusedeckel 6 ist bei dem gezeigten Ausführungsbeispiel nicht nur als Abdeckung für die Zirkulationskammer 14 vorgesehen. Vielmehr bildet der Gehäusedeckel 6 auch Heizrippen 22 mit jeweils U-förmigen Ausnehmungen 24 aus. Die Heizrippen 22 sind einteilig an dem Gehäusedeckel 6 vorgesehen. Der Gehäusedeckel 6 ist als Druckgussteil und aus Aluminium hergestellt. Neben den Heizrippen 22 ragen in Verlängerung der Anschlussstutzen 10 zwei Messfühlerdome 26 in die Zirkulationskammer 14 hinein. Jeder Zirkulations-Teilkammer 14a, 14b ist jeweils ein Messfühlerdom 26a, 26b zugeordnet.

Das Füllvolumen der Zirkulationskammer bei elektrischen Flüssigkeitsheizern der nachstehend beschriebenen Art liegt zwischen 450 ml und 200 ml, bevorzugt zwischen 400 ml und 220 ml und besonders bevorzugt zwischen 300 ml und 230 ml. Dieses Füllvolumen umfasst auch das Füllvolumen des Stutzens. Jeder Stutzen für sich hat ein Füllvolumen von etwa 7 ml. Das gezeigte Ausführungsbeispiel ist üblicherweise in einem Kühlwasserkreislauf in einem Fahrzeug integriert, der ein Volumen von etwa 5 bis 6 Litern hat. In diesen Kühlwasserkreislauf kann zumindest ein Wärmetauscher für die Erwärmung von Luft in der Fahrgastzelle integriert sein. Ergänzend oder alternativ kann auch der Kühlwasserkreislauf Wärmetauscherflächen zu technischen Komponenten eines Elektrofahrzeuges haben, um diese bei kalten Umgebungstemperaturen auf die notwendige Betriebstemperatur zu bringen. Insbesondere dient die elektrische Heizvorrichtung jedenfalls auch der Erwärmung einer Batterie in einem Kraftfahrzeug, welches ausschließlich elektrisch angetrieben werden kann. Der Heizer kann auch so geschaltet sein, dass er sich als Standheizung betreiben lässt, um die Fahrgastzelle vor Inbetriebnahme des Fahrzeugs auf eine für den Benutzer angenehme Temperatur zu erwärmen. Dies erfolgt durch Heizen des flüssigen Fluids, das über einen Wärmetauscher geführt wird, welcher von einem in dem Fahrzeug integrierten Gebläse angestrahlt wird, so dass durch den Wärmetauscher hindurchgeleitete Luft sich an dem Wärmetauscher erwärmt und in die Fahrgastzelle eingeleitet wird. Die Wärmeleistung des elektrischen Zusatzheizers beträgt dabei zwischen 5,0 und 8,0 kW, bevorzugt zwischen 7,0 und 8,0 kW. Diese Heizleistung wird mit einer Ausgestaltung verwirklicht, bei welcher in jeder einzelnen U-förmigen Ausnehmung 24 ein einziges elektrisches Heizelement 28 vorgesehen ist und insgesamt zwischen 9 und 16, bevorzugt zwischen 10 und 14 U-förmige Ausnehmungen in die Zirkulationskammer 14 zwischen 8 und 16, bevorzugt zwischen 10 und 14 Heizrippen 22 hineinragen, die jeweils ein elektrisches Heizelement 28 aufweisen. Die Flächenleistungsdichte liegt zwischen 25 und 27 W/cm².

In jede der U-förmigen Ausnehmungen 24 ist bei dem gezeigten Ausführungsbeispiel ein elektrisches Heizelement 28 eingesetzt. Dieses elektrische Heizelement 28 ist in der EP 1 872 986 A1 bzw. EP 1 921 896 A1 beschriebenen Weise ausgestaltet und in der beispielsweise in EP 2 440 004 A1 bzw. EP 1 931 176 A1 beschriebenen Weise in der U-förmigen Ausnehmung 24 aufgenommen und dort Wärme leitend an die zugeordnete Heizrippe 22 angelegt. Die Heizelemente 28 sind in den Ausnehmungen 24 angeordnet und Wärme leitendend in Kontakt mit den Innenflächen der Heizrippen 22. Die elektrischen Heizelemente 28 sind über ihre Kontaktzungen 28.1, die elektrische Anschlüsse der Heizelemente 28 ausbilden, in einer mit Bezugszeichen 30 gekennzeichneten Anschlusskammer vorgesehen.

In den Figuren 1 und 2 ist ferner zu erkennen, dass der Gehäusedeckel 6 unter Zwischenlage eines Dichtelementes 32 an dem Gehäuseunterteil 4 anliegt. Das Dichtelement 32 ist in einer an dem Gehäuseunterteil 4 ausgesparten Nut 34 eingebracht und dort gehalten. Das Dichtelement 32 überragt eine stirnseitige Endfläche des Gehäuseunterteils 4, auf welche der Gehäusedeckel 6 aufgesetzt ist.

In der Explosionsdarstellung nach Figur 2 ist oberhalb der als PTC-Heizelemente ausgebildeten elektrischen Heizelemente 28 ein Messleitungsstrang 36 gezeigt, der mit den Signalausgängen von in den Messfühlerdomen 26 eingebrachten Messfühlern 37 elektrisch verbunden ist. Das andere Ende des Messleitungsstranges 36 liegt mit seinen Messleitungsanschlusszungen 38 frei.

Unterhalb davon ist in Figur 2 eine Anschlussleiterplatte 40 dargestellt, die aus einer Kunststoffplatte 42 und einer damit verbundenen gestanzten und elektrische Leiterbahnen ausbildenden Blechplatine 44 gebildet ist. Diese Anschlussleiterplatte 40 ist im Detail in der EP 2 505 931 A1 beschrieben. Der Gehäusedeckel 6 hat einen die Trennwand 12 überragenden umlaufenden Rand 45, der ein Anschlussgehäuse 46 für den elektrischen Anschluss der Kontaktzungen 28.1 der Heizelemente 28 an die Anschlussleiterplatte 40 umgibt. Zwischen dem Rand 45 und einteilig an dem Gehäusedeckel 6 ausgeformten Stegen 49 ist ein halb umlaufender Aufnahmeraum 51 für den Messleitungsstrang 36 vorgesehen.

Zuoberst ist in Figur 2 ein Anschlussgehäusedeckel 48 dargestellt, der aus einer stanzbiegebearbeiteten Blechplatte 50 und einer randseitig daran angespritzten TPE-Dichtung 52 besteht, die in eine an dem Gehäusedeckel 6 ausgesparte Dichtnut 54 eingreift, um das Anschlussgehäuse 46 gegenüber der Umgebung abzudichten. Der Deckel 48 liegt auf den Stegen 49 auf.

Die zuvor beschriebenen Bauteile werden zur Montage der elektrischen Heizvorrichtung in Längsrichtung der U-förmigen Ausnehmungen, d.h. in Z-Richtung ineinander gesetzt, um einerseits die Zirkulationskammer 14 abgedichtet auszubilden und andererseits die PTC-Heizelemente 28 in die U-förmigen Ausnehmungen 24 einzusetzen und über ihre nach oben frei abragenden Kontaktzungen 28.1 elektrisch an die Anschlussleiterplatte 40 anzuschließen. In dieser Fügerichtung werden auch die Thermofühler in die Messfühlerdome 26a, 26b eingesetzt und danach über den Messleitungsstrang 36 elektrisch angeschlossen. Zuletzt wird diese Anordnung durch den Anschlussgehäusedeckel 48 abgedeckt und eingesiegelt, so dass auch die in der Anschlusskammer 30 vorgesehenen elektrischen Leitungsbahnen oberseitig gegenüber der Umgebung abgedichtet sind. Dazu hat die Kunststoffplatte 42 von ihrer Oberseite abragende Abstandshalter 56, die einteilig an der Kunststoffplatte 42 ausgeformt sind und über welche der Anschlussgehäusedeckel 48 sicher von den elektrischen Leiterbahnen der Anschlussleiterplatte 40 beabstandet gehalten ist. Auch wird bei eingepresstem Anschlussgehäusedeckel 48 die auf einen Kunststoffrahmen 58 der PTC-Heizelemente 28 aufgesetzte Anschlussleiterplatte 40 durch die Abstandshalter 56 nieder und in der Einbaulage gehalten.

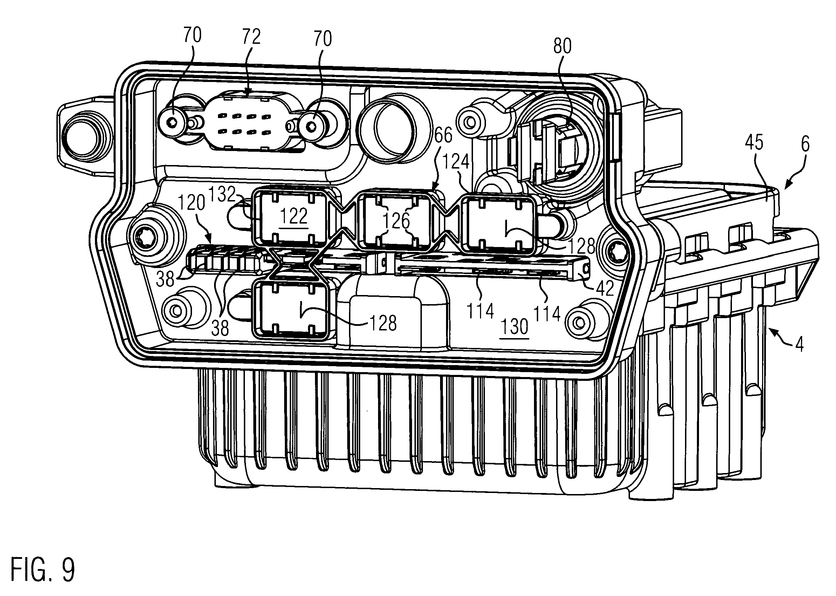

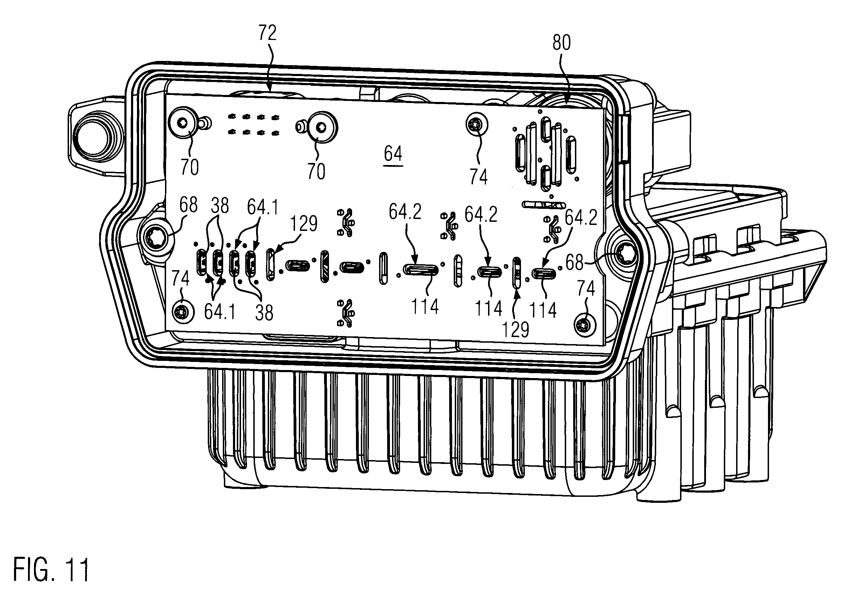

Das in den Figuren 1 und 2 gezeigte Ausführungsbeispiel hat ferner ein metallisches Steuergehäuse 60, in dem eine unter anderem mit Halbleiter-Leistungsschaltern 62 bestückte Steuerleiterplatte 64 angeordnet ist, sowie eine mit Bezugszeichen 66 gekennzeichnete, spritzgegossene Rahmenanordnung 66 aus Kunststoff, auf die nachfolgend noch näher eingegangen werden wird. Befestigungsschrauben 68 dienen der Befestigung des metallischen Steuergehäuses 60 an dem ebenfalls metallischen Gehäusedeckel 6. Steckerbefestigungsschrauben 70 dienen der Befestigung eines Steuersteckers 72 an der Außenseite des Steuergehäuses 60 (vgl. Fig. 9, 11). Mit Bezugszeichen 74 gekennzeichnete Befestigungsstifte dienen der Befestigung der Steuerleiterplatte 64 in dem Steuergehäuse 60 (vgl. Fig. 11).

Mit Bezugszeichen 76 ist ein Masseanschlussstift gekennzeichnet, der das Steuergehäuse 60 in Richtung auf das Gehäuse 2 überragt (vgl. Figur 1). Mit Bezugszeichen 78 ist ein Steuergehäusedeckel gekennzeichnet, der wie der Anschlussgehäusedeckel 48 ausgebildet ist.

Ein mit Bezugszeichen 80 gekennzeichneter Leistungsstecker ist über zwei Sicherungsstifte 82 an der Außenseite des Steuergehäuses 60 befestigt. Schließlich sind zwei längliche Stangen 84 in Figur 2 dargestellt, die als Formschlusselemente einander gegenüberliegende Anlageflächen von Gehäuseunterteil 4 und Gehäusedeckel 6 gegeneinander verriegeln. Gehäuseteil 4 und Gehäusedeckel 6 haben hierzu alternierende einander übergreifende Befestigungsabschnitte 86, 88, auf die nachstehend noch eingegangen werden wird.

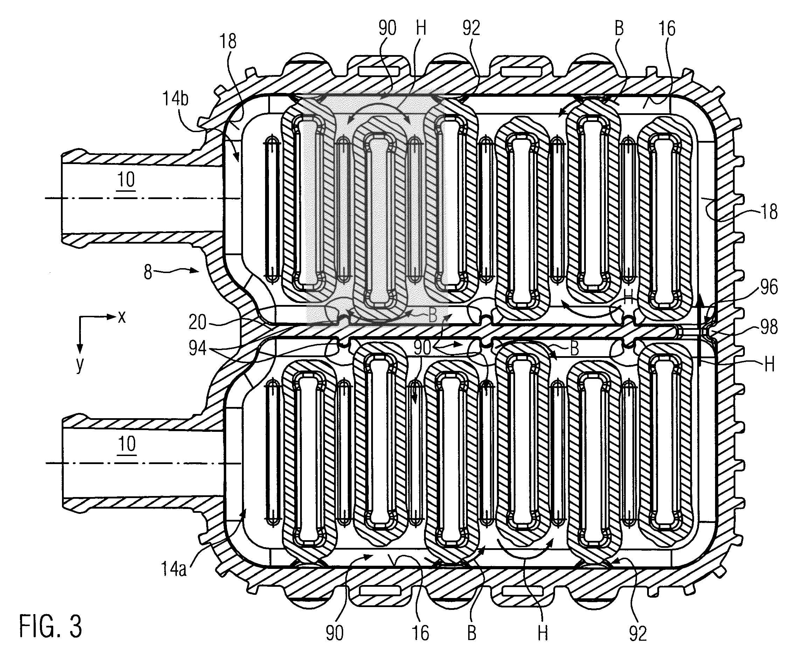

Wie die Schnittansicht in der X-Y-Ebene nach Figur 3 verdeutlicht, sind die einzelnen Heizrippen 22 jeder einzelnen Zirkulations-Teilkammer 14a, 14b in X-Richtung, d.h. Längsrichtung des Gehäuses 2 hintereinander vorgesehen. In jeder der Teilkammern 14a, 14b befindet sich in X-Richtung jeweils eine einzige Heizrippe 22 hinter einer einzigen anderen Heizrippe 22. Die Heizrippen 22 sind allerdings in Y-Richtung alternierend versetzt vorgesehen. Hierdurch ergibt sich ein mit Bezugszeichen 90 gekennzeichneter, mäandrierender Strömungskanal innerhalb der Zirkulations-Teilkammern 14a, 14b, der eine Hauptströmung (Pfeil H) vorgibt. Die einzelnen Heizrippen 22 schließen allerdings mit Ihrer dem Strömungskanal 90 für die Hauptströmung H gegenüberliegenden Seite nicht unmittelbar an die die Zirkulations-Teilkammer 14a, bzw. 14b begrenzende Längsseitenwand 16 bzw. die Abteilwand 20 an. Vielmehr befindet sich dort ein Spalt 92, der eine mit B gekennzeichnete Bypassströmung erlaubt. Wie Figur 3 zu entnehmen ist, hat der Spalt 92 eine Spaltweite entsprechend 5% bis 20%, bevorzugt 7% bis 15 % der lichten Weite zwischen der gegenüberliegenden Stirnseite der entsprechenden Heizrippe 22 und der Längsseitenwand 16 bzw. der Abteilwand 20. Die Spaltweite beträgt vorzugsweise zwischen 3,0 und 0,5 mm, besonders bevorzugt zwischen 2,0 und 0,7 mm. Ganz besonders bevorzugt hat der Spalt eine Weite von zwischen 1,5 und 0,8 mm. Setzt man die jeweilige Spaltweite in Bezug zu der Breite B des Strömungskanals 90, so ergeben sich Verhältnisse von Breite zu Spaltweite von zwischen 4 und 15, bevorzugt zwischen 6 und 10.

Dem Spalt in Strömungsrichtung vorgelagert weist bei dem gezeigten Ausführungsbeispiel jedenfalls die Abteilwand 20 im Strömungskanal 90 Längsrippen 94 auf, durch welche eine Ablösung der Hauptströmung H von der ansonsten eben und gerade verlaufenden Abteilwand 20 abgelöst wird. Wie des Weiteren die Figur 3 erkennen lässt, sind die Heizrippen 22 zu ihrem stirnseitigen Ende hin gegenüber dem mittleren Bereich leicht verdickt. In dem mittleren Bereich bilden die Heizrippen 22 innen ebene Anlageflächen 22.1 für die elektrischen Heizelemente 28 aus.

In Verlängerung der Abteilwand 20 und gegenüberliegend zu den Anschlussstutzen 10 ist ein Strömungsdurchlass 96 vorgesehen, der einen Durchgang der Strömung zwischen den beiden Zirkulations-Teilkammern 14a, 14b erlaubt. Dabei bleibt die Hauptströmung H jedoch in der X-Y-Darstellungsebene gemäß Figur 3. Der Strömungsdurchlass 96 wird wandnah von einer Längsrippe 98 begrenzt, die von der ansonsten ebenen Stirnseitenwand 18 abragt und in Höhenrichtung von einem Boden 100 zu der Trennwand 12 durchlaufend ausgebildet ist.

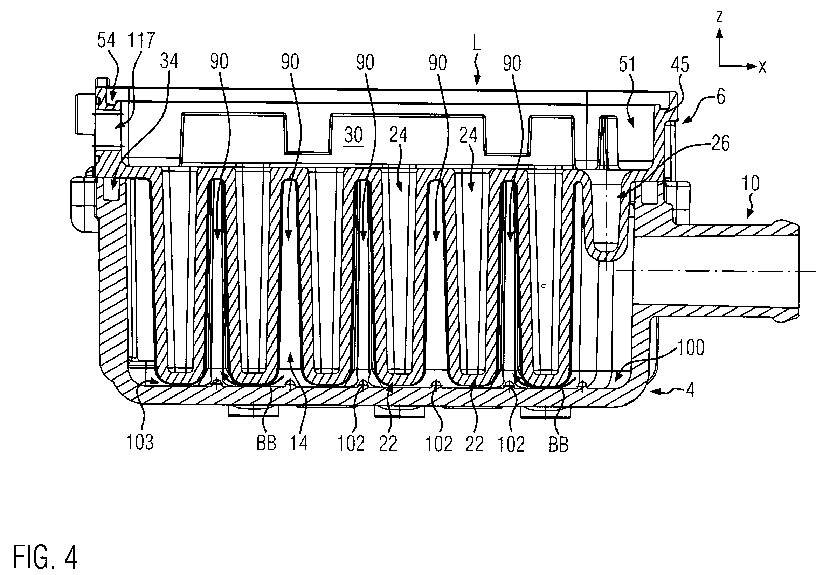

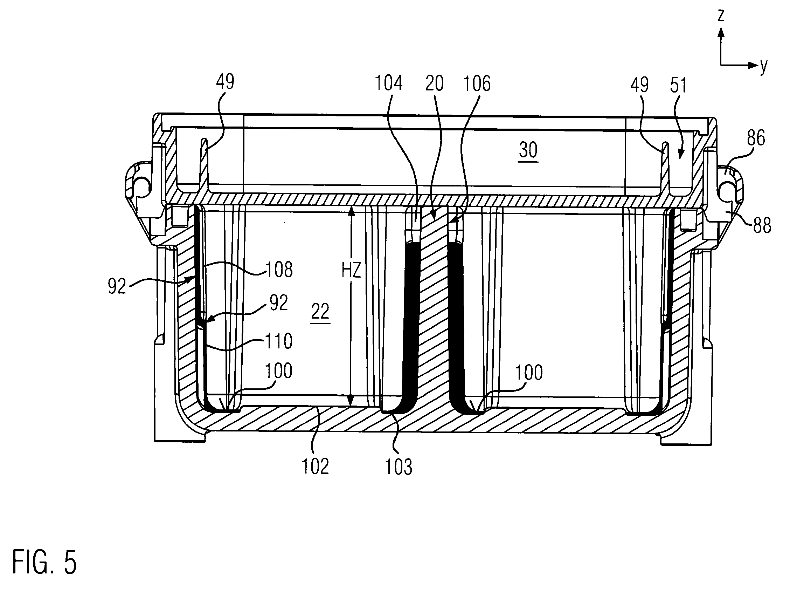

In Figur 3 und insbesondere den Figuren 4 und 5 sind ferner von dem Boden 100 abragende Querrippen 102 zu erkennen, die zwischen benachbarten Heizrippen 22 vorgesehen sind. Die Querrippen 102 überragen das freie untere Ende der Heizrippen 22 (vgl. Figur 4) und sorgen ebenfalls für eine Strömungsablösung von dem Boden 100. Wie ferner aus Figur 4 ersichtlich hat das freie Ende 22.2 der Heizrippe 22 nur einen geringen Abstand von 8 mm bis 10 mm zu dem Boden 100, so dass sich ein Bodenspalt 103 ergibt, der eine Boden-Bypassströmung BB erlaubt.

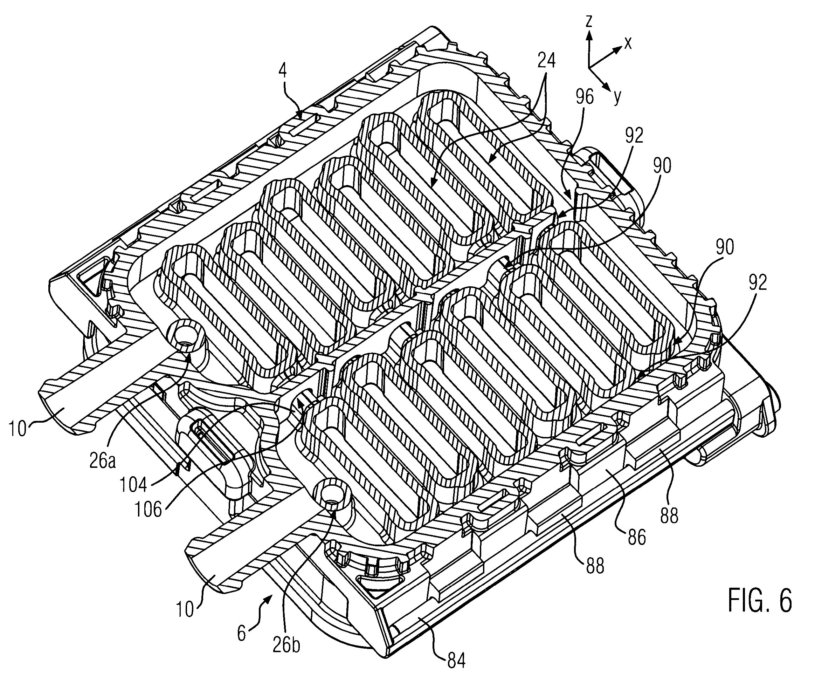

In den zuvor beschriebenen Figuren sowie in Figur 6 sind kartesische Koordinaten X, Y und Z eingetragen. Es ergibt sich aufgrund der vorherigen Beschreibung, dass die Hauptströmung H sich allein in der X-Y-Ebene erstreckt (vgl. Fig. 3). Die Anschlussstutzen 10 liegen auf einer Höhe in Z-Richtung, vgl. Fig. 2. Eine Umlenkung der Hauptströmung H um die jeweiligen Heizrippen 22 erfolgt allein um Umlenkkanten, die sich im Wesentlichen in der Z-Richtung erstrecken, so die Stirnseiten der Heizrippen 22 bzw. die den Strömungsdurchlass 96 begrenzenden Wandungsteile des Gehäuseunterteils 4. Speziell wird die Hauptströmung H nicht zwischen den beiden Zirkulations-Teilkammern 14a, 14b in eine andere, von der vorherigen Strömungsebene in Z-Richtung getrennte Strömungsebene überführt.

Nachstehend werden Details der den Bypassstrom B begrenzenden Wandungen von Gehäuseunterteil 4 und Gehäusedeckel 6 beschrieben, die insbesondere den Figuren 3, 5 und 6 zu entnehmen sind. Dabei ragen die Heizrippen 22 von der im Grunde eben und gerade durchgehend verlaufenden Trennwand 12 ab. In Y-Richtung benachbarte und unterschiedlichen Zirkulations-Teilkammern 14a, 14b zugeordnete Heizrippen 22 sind über einen die Trennwand 12 überragenden Verbindungssteg 104 miteinander verbunden, für welchen die Abteilwand 20 eine korrespondierend hierzu ausgebildete Verbindungsstegaufnahme 106 ausbildet. Eine vollständige Abdichtung zwischen den Zirkulations-Teilkammern 14a, 14b ist nicht notwendig. Gleichwohl ist es gewünscht, durch entsprechende Ausgestaltung der Abteilwand 20 eine Leckageströmung im Wesentlichen zu vermeiden und die Hauptströmung zwischen den Zirkulations-Teilkammern 14a, 14b möglichst vollständig durch den Strömungsdurchlass 96 hindurchzuführen.

Die Heizrippen 22 haben einen den Spalt 92 begrenzenden Heizrippensteg 108, der sich in etwa über 3/5 einer Höhe HZ der Zirkulationskammer erstreckt (vgl. Figur 5). In Fortsetzung dieser Heizrippenstege 108 ist ein von dem Boden 100 abragender und durch das Gehäuseunterteil 4 einteilig ausgeformter Gehäusesteg 110 vorgesehen. Zwischen den jeweiligen Stegen 108, 110 und der gegenüberliegenden Gegenfläche der Heizrippe 22 bzw. des Gehäuseunterteils 6 wird der zuvor erwähnte Spalt 92 gebildet. Die Stege 108, 110 enden in etwa höhengleich, allerdings in Höhenrichtung mit einem geringen Abstand, so dass auch zwischen den Stegen 108, 110 ein die Bypassströmung B ermöglichender Spalt 92 vorgesehen ist.

Nachfolgend werden die besondere Ausgestaltung der Anschlussleiterplatte 40 und das Fügen von Leistungsteil L und Steuerteil S näher erläutert. Der Leistungsteil L besteht dabei aus den Figur 2, links übereinander dargestellten Bauteilen, nämlich dem Gehäuseunterteil 4, dem Dichtelement 32, dem Gehäusedeckel 6, den darin aufgenommenen elektrischen Heizelementen 28, dem Messleitungsstrang 36 und der Anschlussleiterplatte 40 sowie dem diese abdeckenden Anschlussgehäusedeckel 48. Zum Leistungsteil L gehören auch die zum Fügen von Gehäuseunterteil 4 und Gehäusedeckel 6 vorgesehenen Stangen 84. Der Steuerteil S umfasst im Wesentlichen das Steuergehäuse 60, die darin aufgenommene Steuerleiterplatte 64, die zwischen dem Steuergehäuse 60 und der Steuerleiterplatte 64 vorgesehene Rahmenanordnung 66 sowie schließlich den metallischen Steuergehäusedeckel 78. Dabei ist zu vermerken, dass die jeweiligen Deckel 48 und 78 aus gestanztem Blech hergestellt sind und durch Stanzen und Biegen daran einteilig ausgebildete metallische Krallen 112 umfassen, die mit den zugeordneten Wandungen von Gehäusedeckel 6 bzw. Steuergehäuse 60 zusammenwirken, um eine umfängliche Abschirmung zu bilden, die einerseits die Anschlussleiterplatte 40 umschließt und andererseits die Steuerleiterplatte 64.

Beim Herstellen des Leistungsteils L wird der Gehäusedeckel 6 unter Kompression des Dichtelementes 32 auf das Gehäuseunterteil 4 aufgesetzt. Die alternierenden, ineinander greifenden Befestigungsabschnitte 86, 88 gleiten dabei aneinander vorbei. Einander gegenüberliegende Anlageflächen dieser Befestigungsabschnitte 86, 88 werden durch den äußeren Druck so weit voneinander beabstandet, dass die Stangen 84 aus der in Figur 2, rechts gezeigten Lage in X-Richtung zwischen die Anlageflächen der Befestigungsabschnitte 86, 88 gebracht werden können. Danach wird die äußere Kraft entlastet. Das elastisch komprimierte Dichtelement 32 drückt die beiden Teile 4, 6 in Z-Richtung auseinander. Die einander gegenüberliegenden Anlageflächen der Befestigungsabschnitte 86, 88 legen sich schließlich an die Stangen 84 an, welche eine weitere Bewegung der Teile 4, 6 verhindern. Danach sind das Gehäuseunterteil 4 und der Gehäusedeckel 6 formschlüssig miteinander verbunden. Es ergibt sich eine einfache formschlüssige Verbindung der wesentlichen Komponenten des Leistungsteils L.

Dabei stoßen die Stangen 84 in Figur 2, links gegen durch das Gehäuseunterteil 4 ausgebildete Anschlagflächen. So sind die Stangen 84 in ihrer Längsrichtung in X-Richtung einseitig festgelegt. Nach Aufbringen des Steuergehäuses 6, welches in axialer Verlängerung der Stangen 84 Gegenflächen für die Stangen 84 ausbildet, sind auch die Stangen 84 in der anderen Richtung und damit insgesamt in X-Richtung zwischen zwei gegenüberliegenden Anschlägen formschlüssig gesichert, so dass diese am Ort bleiben.

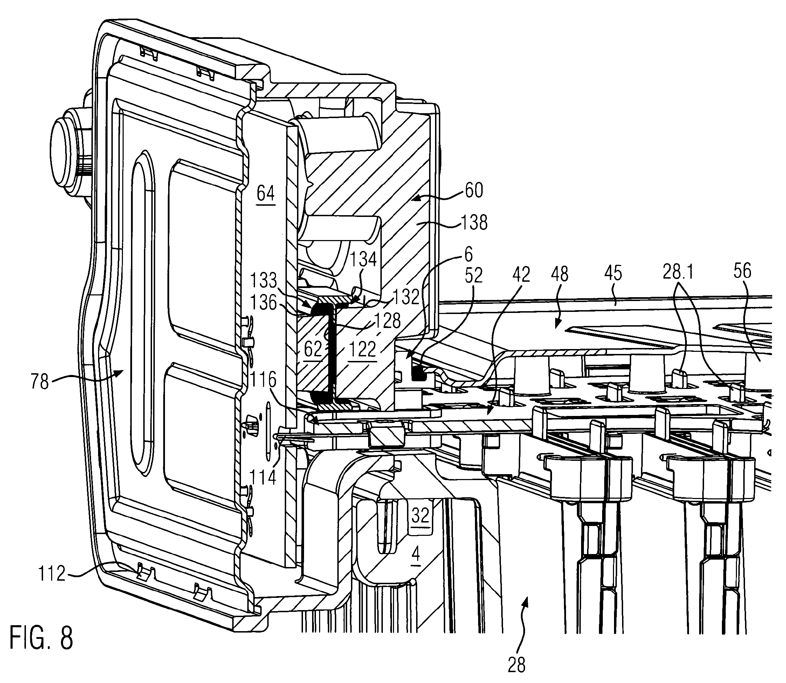

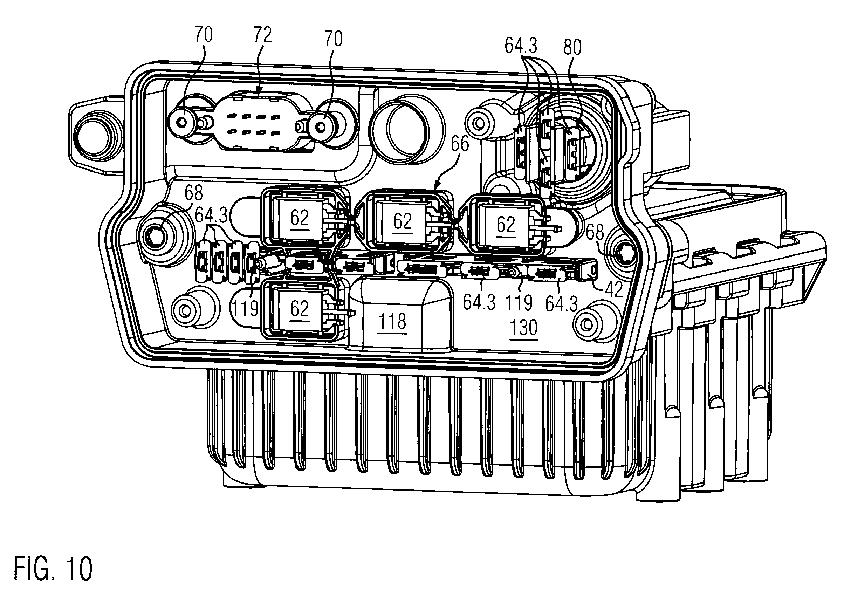

Wie insbesondere der Figur 8 zu entnehmen ist, überragt die Anschlussleiterplatte 40 sowohl mit ihren durch Stanzen der Blechplatine 44 gebildeten Anschlussleiterplatte-Anschlussfahnen 114 wie auch durch einen Endabschnitt 116 der Kunststoffplatte 42 den Leistungsteil L, d.h. das Gehäuse 2. Dazu weist der Gehäusedeckel 6 in dem Rand 45 eine Anschlussleiterplatte-Durchführöffnung 117 auf (vgl. Fig. 4). Auf dieses freiliegende Ende der Anschlussleiterplatte 40 wird das Steuerteil L nach noch nachfolgend zu beschreibender Vormontage der in dem Steuergehäuse 60 aufgenommenen Bauelemente aufgeschoben. Der Figur 10 ist ferner eine Ausgestaltung zu entnehmen, bei welcher der Endabschnitt 116 der Kunststoffplatte 42 zudem noch durch Positionierzapfen 119 überragt ist, welche die Anschlussfahnen 114 überragen.

Wie insbesondere aus Figur 9 ersichtlich, hat das Steuergehäuse 60 eine Anschlussleiterplatten-Anschlussöffnung 118, deren Abmessung exakt auf die Kontur des Endabschnitts 116 der Anschlussleiterplatte 40 angepasst ist, so dass sich eine Schiebeführung ergibt. Dies schließt auch einen leicht verdickten Bereich der Kunststoffplatte 42 ein, welcher - in Figur 9, links dargestellt - Messzungenaufnahmen 120 für die zuvor bereits erwähnten Messleitungsanschlusszungen 38 aufweist. In diesen Messzungenaufnahmen 120 sind die Messleitungsanschlusszungen 38 positioniert gehalten, so dass deren freie Enden wie auch die Anschlussleiterplatten-Anschlussfahnen 114 die Kunststoffplatte 42 überragen.

Figur 9 verdeutlich ferner die zuvor bereits erwähnte Rahmenanordnung 66. Es handelt sich um eine Anordnung von vier Rahmen 124, die als spritzgegossene Einheit aus Silikon hergestellt und mit dem Steuergehäuse über Steckverbinder verbunden ist. Das Steuergehäuse 60 weist Vorsprünge 122 auf, die jeweils von einem einzelnen Rahmen 124 der Rahmenanordnung 66 umgeben sind. Einteilig an der Rahmenanordnung 66 angeformte Haltestege 126 ragen nach innen von den Rahmen 124 ab. Diese Haltestege 126 liegen stirnseitig auf von den jeweiligen Vorsprüngen 122 ausgebildeten ebenen Anlageflächen 128 auf.

Die Rahmen 124 umgeben die Leistungstransistoren 62 in einer nachstehend noch näher zu beschreibenden Weise. Die Steuerleiterplatte 64 wird nach Bestücken mit sämtlichen elektronischen und elektrischen Bauteilen und Steuerelementen zunächst in das Steuergehäuse 60 eingesetzt. Die Steuerleiterplatte 64 wird danach mit den Befestigungsstiften 74 gegenüber dem Steuergehäuse 60 befestigt. Die so vormontierte Einheit aus Steuergehäuse 60, Rahmenanordnung 66 und Steuerleiterplatte 64 wird danach auf das Leistungsteil in einer Richtung aufgeschoben, die quer zur Einbringrichtung der Heizelemente 28 in die U-förmigen Aufnahmen 24 verläuft. Hierbei treffen zunächst die Positionierzapfen 119 auf die Ebene der Steuerleiterplatte 64. Korrespondierend zu den Positionierzapfen 119 sind an vorbestimmten Stellen und in Figur 11 mit Bezugszeichen 129 gekennzeichnete Positionierzapfen-Aufnahmen vorgesehen. In diese Aufnahmen 129 der Steuerleiterplatte 64 greifen die Positionierzapfen 119 mit geringem Spiel in Querrichtung ein. Bei dem gezeigten Ausführungsbeispiel sind diese Positionierzapfen-Aufnahmen 129 als Längsschlitze ausgebildet und geben dementsprechend lediglich eine Positionierung in einer Richtung quer hierzu im Grunde exakt vor. Selbstverständlich können die entsprechenden Öffnungen auch kreisrund und nach einer Art Passung für die Positionierzapfen 119 ausgebildet sein, um die relative Lage zwischen der Anschlussleiterplatte 40 und der Steuerleiterplatte 64 eindeutig vorzugeben. Bei dem gezeigten Ausführungsbeispiel wird die Vorpositionierung indes durch die Passung zwischen den Abmessungen der Kunststoffplatte 42 und der Abmessung der Anschlussöffnung 118 ganz wesentlich mitbestimmt, so dass eine Passung vorliegend zwischen der Positionierzapfen-Aufnahme 129 und dem zugeordneten Positionierzapfen 119 die Position lediglich in Y-Richtung exakt vorgeben muss. Beim weiteren Aufschieben des Steuerteils S auf den Leistungsteil L greifen die freiliegenden Messleitungsanschlusszungen 38 in an der Steuerleiterplatte 64 ausgesparte Bohrungen 64.1 ein, wie dies aus Figur 11 ersichtlich ist. Ferner durchsetzen die Anschlussleiterplatten-Anschlussfahnen 114 Bohrungen 64.2 in der Steuerleiterplatte 64. Dieser Sachverhalt ist ebenfalls in Figur 11 dargestellt. In die entsprechenden Bohrungen 64.1; 64.2 der Steuerleiterplatte 64 sind weibliche Kontaktelemente 64.3 eingebracht, die mit der Steuerleiterplatte 64 mechanisch und dadurch mit Leiterbahnen der Steuerleiterplatte 64 elektrisch verbunden sind, wie sie in der EP 2 236 330 A1 der vorliegenden Anmelderin beschrieben sind. (Die weiblichen Kontaktelemente 64.3 sind in Figur 10 ohne die zugehörige Steuerleiterplatte 64 aus Darstellungsgründen isoliert dargestellt.) So ist die Steuerleiterplatte 64 nach dem Aufschieben des vormontierten Steuergehäuses 60 in X-Richtung gegen das Leistungsteil L elektrisch mit der Anschlussleiterplatte 40 verbunden. Üblicherweise wird vor dem Aufschieben des Steuergehäuses 60 das Steuerteil S vollständig vormontiert, d.h. das Steuergehäuse 60 mit dem Steuergehäusedeckel 78 verschlossen.

Nachstehend wird die besondere Ausgestaltung des Steuergehäuses 60 und die darin verwirklichte Montage der Halbleiter-Leistungsschalter 62 beschrieben.

Das aus Metall gebildete Steuergehäuse 60 hat vorliegend vier rechteckige Anlageflächen 128, die jeweils durch die Gehäusevorsprünge 122 ausgebildet sind, die von einem im Grunde ebenen Steuergehäuseboden 130 in Richtung auf die Steuerleiterplatte 64 vorspringen. Seitlich neben den oberen drei Gehäusevorsprüngen 122 sind jeweils den Steuergehäuseboden 130 überragende Montagezapfen durch das das Steuergehäuse 60 bildende Material einteilig ausgeformt, welche mit einer Bohrung versehen sind, in welche Befestigungszapfen der Rahmenanordnung 66 eingreifen und dort befestigt sind. Eine entsprechende Ausgestaltung ergibt sich links von dem unteren Gehäusevorsprung 122 gemäß der Darstellung von Figur 9. Wie sich weiter aus dieser Figur ergibt, weist jeder Rahmen 124 der Rahmenanordnung 66 vier Haltestege 126 auf, die oben auf der Anlagefläche 128 aufliegen und von einem umfänglich die Anlagefläche 128 umgebenden Rand nach innen vorspringen. Die Rahmen 124 umschließen den Gehäusevorsprung 128 mit einem gewissen Abstand. Die Rahmen 124 haben ferner - wie insbesondere aus Figur 8 ersichtlich - eine in Richtung auf den Steuergehäuseboden 130 vorspringenden unteren Rand 124.1, der den Haltesteg 126 nach unten überragt und jedenfalls teilweise eine Umfangsfläche 132 des Gehäusevorsprungs 122 umgibt, sowie einen in die entgegen gesetzte Richtung abragenden oberen Rand 124.2, der zwischen dem Leistungsschalter 62 und dem Rahmen 124 einen Zwischenraum 133 vorgibt. Durch die Anordnung des unteren Randes 124.1 mit Abstand zu dem Gehäusevorsprung 122 ergibt sich zwischen dem Rahmen 124 und diesem Gehäusevorsprung 122 ein umlaufender, d.h. ringförmiger Klebespalt 134.

Die Figur 8 zeigt die Situation nach dem Einbau der zunächst vormontierten und als bauliche Einheit in das Steuergehäuse 60 eingebrachten Steuerleiterplatte 64. Dabei liegen die Halbleiter-Leistungstransistoren 62 stirnseitig gegen die Haltestege 126 an, welche dementsprechend einen definierten Abstand zwischen den Halbleiter-Leistungstransistoren 62 und der Anlagefläche 128 vorgeben. Jeglicher Zwischenraum zwischen der Anlagefläche 128 und dem Halbleiter-Leistungstransistor 62 ist durch einen Silikonkleber 136 ausgefüllt, der vorliegend ein Ausführungsbeispiel für die adhäsive Masse darstellt. Der Silikonkleber 136 hat eine gute Wärmeleitfähigkeit, ist indes elektrisch isolierend. Der obere Rand 124.2 umschließt einen Montageraum 137 für den Halbleiter-Leistungsschalter 62, der nach dem Einbringen desselben in den Rahmen 124 vollständig von dem Silikonkleber 136 ausgefüllt ist. Wie insbesondere aus Figur 8 ersichtlich ist, überragt der Silikonkleber 136 gar das zu der Steuerleiterplatte 64 vorspringende Ende des oberen Randes 124.2

Zur Montage wird der Silikonkleber 136 zunächst auf die Anlagefläche 128 aufgebracht. Danach wird die vormontierte Steuerleiterplatte 64 in das Steuergehäuse 60 eingebracht. Zum Ende dieser Einbringbewegung trifft die stirnseitige Vorderfläche der jeweiligen Halbleiter-Leistungstransistoren 62 auf den Silikonkleber 136. Dieser wird bei fortschreitender Einbringbewegung der Steuerleiterplatte 64 zunächst in der Ebene verdrängt und verteilt sich gleichmäßig auf der Anlagefläche 128. Es ist aber so viel Silikonkleber 136 auf jede der Anlageflächen 126 aufgebracht, dass die von dem Rahmen 124 jeweils umgebene Anlagefläche 128 nicht nur vollständig in Umfangsrichtung mit dem Silikonkleber 136 benetzt wird. Vielmehr steigt der Silikonkleber 136 durch das Verdrängen des Volumens zwischen der Anlagefläche 128 und dem Halbleiter-Leistungstransistor 62 sowohl in Richtung auf die Steuerleiterplatte 64 als auch in den Klebespalt 134. So ergibt sich eine gute Einsiegelung des Halbleiter-Leistungstransistors 62. Auch ist der Rahmen 124 relativ großflächig mit dem Silikonkleber 136 und damit haftvermittelnd und fest mit dem Steuergehäuse 60 verbunden. Des Weiteren sorgt der Silikonkleber 136 aufgrund seiner guten Wärmeleitfähigkeit zu einer guten Ableitung der von dem Halbleiter-Leistungstransistor 62 erzeugten Verlustleistung. Auf der dem Halbleiter-Leistungstransistor 62 gegenüberliegenden Seite bildet das Steuergehäuse 60 einteilig daran angeformte Kühlrippen 138 aus. Diese sind zumindest auch genau gegenüberliegend zu den jeweiligen Halbleiter-Leistungstransistoren 62 vorgesehen.

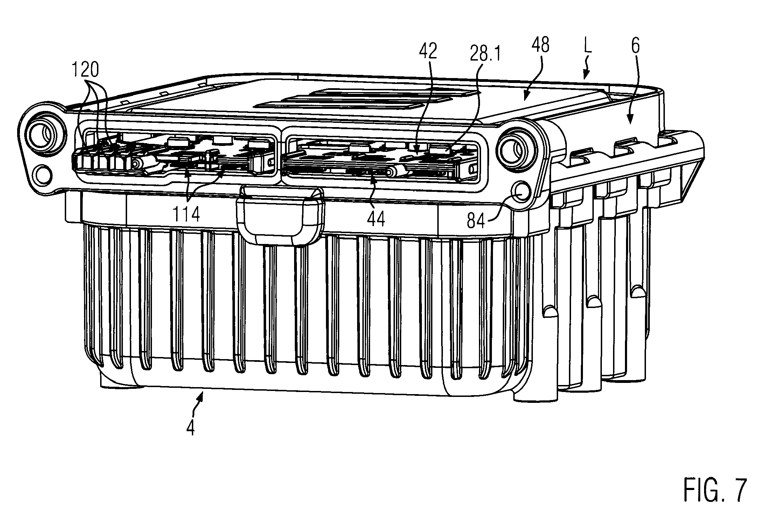

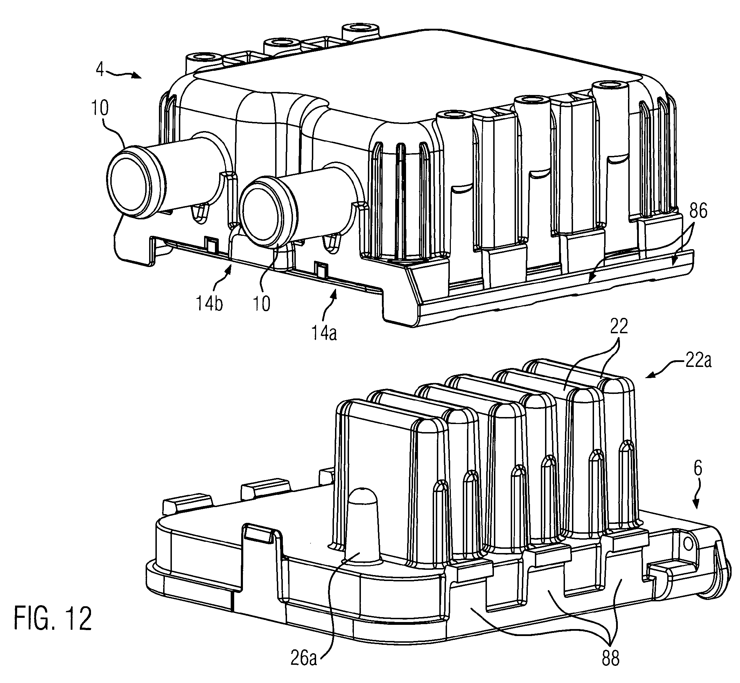

Die Figur 12 zeigt eine Abwandlung zu dem zuvor diskutierten Ausführungsbeispiel. Dieses kann mit denselben Komponenten wie zuvor beschrieben bestückt sein, um den Leistungsteil L auszubilden. Auch kann der Steuerteil S in identischer Weise ausgebildet und seitlich an den Leitungsteil L angeflanscht sein. Das in Figur 12 gezeigte Ausführungsbeispiel des Gehäuses 2 unterscheidet sich lediglich dadurch von dem Leistungsteil L nach den vorherigen Figuren, dass der Gehäusedeckel 4 lediglich eine Reihe von in Richtung hintereinander vorgesehenen Heizrippen 22a aufweist. Diese sind in Verlängerung des Einlassstutzens 10 vorgesehen. In der anderen Zirkulations-Teilkammer 14b befinden sich keine Heizrippen 22. Diese Zirkulations-Teilkammer 14b dient lediglich der Rückführung des zu erwärmenden Fluids. Die Zirkulations-Teilkammer 14a ist dementsprechend wie bei dem zuvor diskutierten Ausführungsbeispiel aufgebaut; die Zirkulations-Teilkammer 14b dient aber lediglich der Strömungsrückführung zu dem Auslassstutzen 10, links in Fig. 12. So hat das Ausführungsbeispiel nach Figur 12 auch lediglich in etwa die Hälfte der Wärmeleistung im Vergleich zu dem unter Bezugnahme auf die Figuren 1 bis 11 diskutierten ersten Ausführungsbeispiel.

### Bezugszeichenliste

- 2: Gehäuse
- 4: Gehäuseunterteil
- 6: Gehäusedeckel
- 8: erste Stirnseite
- 10: Anschlussstutzen
- 12: Trennwand
- 14: Zirkulationskammer
- 14a, 14b: Zirkulations-Teilkammer
- 16: Längsseitenwand
- 18: Stirnseitenwand
- 20: Abteilwand
- 22: Heizrippe
- 22.1: ebene Anlagefläche der Heizrippe
- 22.2: freies Ende der Heizrippe
- 24: U-förmige Ausnehmungen
- 26a, 26b: Messfühlerdom
- 28: elektrisches Heizelement
- 28.1: Kontaktzunge
- 30: Anschlusskammer
- 32: Dichtelement
- 34: Nut
- 36: Messleitungsstrang
- 37: Messfühler
- 38: Messleitungsanschlusszunge
- 40: Anschlussleiterplatte
- 42: Kunststoffplatte
- 44: Blechplatine
- 45: Rand
- 46: Anschlussgehäuse
- 48: Anschlussgehäusedeckel
- 49: Steg
- 50: Blechplatte
- 51: Aufnahmeraum
- 52: TPE-Dichtung
- 54: Dichtnut
- 56: Abstandshalter
- 58: Kunststoffrahmen
- 60: Steuergehäuse
- 62: Halbleiter-Leistungsschalter /-Leistungstransistor
- 64: Steuerleiterplatte
- 64.1: Bohrung für Messleitungsanschlusszunge 38
- 64.2: Bohrung für Anschlussleiterplatten-Anschlussfahne 114
- 64.3: weibliche Kontaktelemente
- 66: Rahmenanordnung
- 68: Befestigungsschraube
- 70: Steckerbefestigungsschraube
- 72: Steuerstecker
- 74: Befestigungsstift
- 76: Masseanschlussstift
- 78: Steuergehäusedeckel
- 80: Leistungsstecker
- 82: Sicherungsstift
- 84: Stange
- 86: Befestigungsabschnitt des Gehäuseunterteils
- 88: Befestigungsabschnitt des Gehäusedeckels
- 90: Strömungskanal
- 92: Spalt
- 94: Längsrippe (Abteilwand 20)
- 96: Steuerungsdurchlass
- 98: Längsrippe (Strömungsdurchlass 96)
- 100: Boden
- 102: Querrippe
- 103: Bodenspalt
- 104: Verbindungssteg
- 106: Verbindungsstegaufnahme
- 108: Heizrippensteg
- 110: Gehäusesteg
- 112: Kralle
- 114: Anschlussleiterplatten-Anschlussfahne
- 116: Endabschnitt
- 117: Anschlussleiterplatten-Durchführöffnung
- 118: Anschlussleiterplatten-Anschlussöffnung
- 119: Positionierzapfen
- 120: Messzungenaufnahme
- 122: Gehäusevorsprung
- 124: Rahmen
- 124.1: unterer Rand
- 124.2: oberer Rand
- 126: Haltesteg
- 128: Anlagefläche
- 129: Positionierzapfen-Aufnahme
- 130: Steuergehäuseboden
- 132: Umfangsfläche
- 133: Zwischenraum
- 134: Klebespalt
- 136: Silikonkleber
- 137: Montageraum
- 138: Kühlrippe

- B: Bypassströmung
- BB: Boden-Bypassströmung
- H: Hauptströmung
- HZ: Höhe der Zirkulationskammer 14
- L: Leistungsteil
- S: Steuerteil

## Patentansprüche

1. Elektrische Heizvorrichtung, insbesondere für die Erwärmung eines temperierten Mediums in einem Kraftfahrzeug, mit einem Gehäuse (2), das Rohranschlüsse (10) für den Anschluss von das Temperiermedium führenden Rohren aufweist und eine Zirkulationskammer (14) umschließt, in welche Heizrippen (22) hineinragen, die jeweils mit einer U-förmigen Ausnehmung (24) versehen sind, die sich zu einer einheitlichen Anschlusskammer (30) öffnen, die von der Zirkulationskammer (14) durch eine im Bereich der offenen Enden der U-förmigen Ausnehmungen (24) vorgesehene Trennwand (12) getrennt ist, wobei die Heizrippen (22) sich im Wesentlichen in einer Y-Z-Ebene erstrecken und entlang einer orthogonal hierzu vorgesehenen X-Achse hintereinander und versetzt zueinander vorgesehen und alternierend wandnah angeordnet sind, so dass in der Zirkulationskammer (14) ein mäandrierender Strömungskanal (90) ausgebildet ist, wobeidie Heizrippen (22) und die Zirkulationskammer (14) umgebende Wände (16, 18, 20) des Gehäuses (2) so vorgesehen sind, dass der Strömungskanal (90) eine sich allein in der X-Y-Ebene erstreckende Hauptströmung (H) des Mediums zwischen den Rohranschlüssen (10) vorgibt,**dadurch gekennzeichnet, dass** das Gehäuse (2) wenigstens zwei Zirkulations-Teilkammern (14a, 14b) ausbildet, die durch eine sich im Wesentlichen in der X-Z-Ebene erstreckende Abteilwand (20) voneinander getrennt sind.

2. Elektrische Heizvorrichtung nach Anspruch 1, **dadurch gekennzeichnet, dass** das Gehäuse (2) sich in X-Richtung erstreckende und die Rohranschlüsse (10) vorgebende Anschlussstutzen (10) aufweist, die an der gleichen Seitenwand (8) des Gehäuses (2) angeordnet sind.

3. Elektrische Heizvorrichtung nach Anspruch 1 oder 2, **dadurch gekennzeichnet, dass** die Abteilwand (20) an einer dem wenigstens einen Rohranschluss (10) gegenüberliegenden Seite einen benachbart zu einer die Zirkulationskammer (14) umgebenden Wand (16) vorgesehenen Strömungsdurchlass (96) ausspart.

4. Elektrische Heizvorrichtung nach einem der vorherigen Ansprüche, **dadurch gekennzeichnet, dass** die Zirkulationskammer (14) von einem aus Kunststoff gebildeten wannenförmigen Gehäuseunterteil (4) umgeben ist, das von einem die Heizrippen (22) einteilig ausbildenden Gehäusedeckel (6) aus einem gut Wärme leitenden Material abgedichtet ist.

5. Elektrische Heizvorrichtung nach Anspruch 4, **dadurch gekennzeichnet, dass** das Gehäuseunterteil (4) einteilig die Abteilwand (20) und die Rohranschlüsse (10) vorgebende Anschlussstutzen (10) ausbildet.

6. Elektrische Heizvorrichtung nach einem der vorherigen Ansprüche, **dadurch gekennzeichnet, dass** zwischen einer die Zirkulationskammer (14) begrenzenden Längsseitenwand (16) des Gehäuses (2) und der Heizrippe (22) gegenüberliegend zu dem Strömungskanal (90) ein eine Bypassströmung (B) erlaubender Spalt (92) ausgebildet ist.

7. Elektrische Heizvorrichtung nach einem der vorherigen Ansprüche, **dadurch gekennzeichnet, dass** die Heizrippe (22) und/oder wenigstens eine die Zirkulationskammer (14) des Gehäuses (2) begrenzende Längsseitenwand (16) an einer den Strömungskanal (90) gegenüberliegenden Seite einen Steg (108, 110) aufweist, der sich zwischen der Heizrippe (22) und der Längsseitenwand (16) erstreckt.

8. Elektrische Heizvorrichtung nach Anspruch 7, **dadurch gekennzeichnet, dass** das Gehäuseunterteil (4) einen von dem Boden (100) abgehenden Steg (110) aufweist, dass die Heizrippe (22) einen von der Trennwand (12) abgehenden Steg (108) aufweist und dass der von dem Boden (100) abgehende Steg (110) in etwa höhengleich mit dem von der Trennwand (12) abgehenden Steg (108) endet.

9. Elektrische Heizvorrichtung nach einem der Ansprüche 4 bis 8, **dadurch gekennzeichnet, dass** zwischen einem freien Ende der Heizrippe (22) und einem Boden (100) des Gehäuseunterteils (4) ein eine Boden-Bypassströmung (BB) erlaubender Bodenspalt (103) ausgebildet ist.

10. Elektrische Heizvorrichtung nach Anspruch 9, **dadurch gekennzeichnet, dass** zwischen benachbarten Heizrippen (22) eine von dem Boden (100) abragende Querrippe (102) vorgesehen ist, die sich parallel zu den Heizrippen (22) erstreckt.

11. Elektrische Heizvorrichtung nach Anspruch 10, **dadurch gekennzeichnet, dass** zwischen benachbarten Heizrippen (22) eine von zumindest einer der Seitenwände (16, 18) und/oder der Abteilwand (20) abragende Längsrippe (94, 98) vorgesehen ist.

## Claims

1. Electric heating device, particularly for heating a temperature-controlled medium in an automotive vehicle, comprising a housing (2) which comprises pipe connections (10) for the connection of pipes conducting the temperature-control medium and which encloses a circulation chamber (14) into which heating ribs (22) are projecting, each provided with a U-shaped recess (24), which open towards a unitary connection chamber (30) which is separated from the circulation chamber (14) by a partition wall (12) provided in the area of the open ends of the U-shaped recesses (24), wherein the heating ribs (22) extend substantially in a Y-Z plane and are provided one after the other and offset relative to one another along an X-axis provided orthogonal thereto and are arranged alternatingly near a wall, so that a meandering flow channel (90) is formed in the circulation chamber (14), wherein walls (16, 18, 20) of the housing (2) which surround the heating ribs (22) and the circulation chamber (14) are provided such that the flow channel (90) predetermines a main flow (H) of the medium, which solely extends in the X-Y plane, between the pipe connections (10), **characterized in that** the housing (2) forms at least two circulation sub-chambers (14a, 14b) which are separated from each other by a dividing wall (20) extending substantially in the X-Z plane.

2. Electric heating device according to claim 1, **characterized in that** the housing (2) comprises connecting pieces (10) which extend in X-direction and predetermine the pipe connections (10) and which are arranged at the same side wall (8) of the housing (2).

3. Electric heating device according to claim 1 or 2, **characterized in that** the dividing wall (20) at a side opposite to the at least one pipe connection (10) recesses a flow passage (96) provided adjacent to a wall (16) surrounding the circulation chamber (14).

4. Electric heating device according to any one of the preceding claims, **characterized in that** the circulation chamber (14) is surrounded by a trough-shaped housing base (4) which is made of plastics and which is sealed by a housing lid (6) which forms the heating ribs (22) as one part and consists of a highly heat-conducting material.

5. Electric heating device according to claim 4, **characterized in that** the housing base (4) forms as one part the dividing wall (20) and connecting pieces (10) predetermining the pipe connections (10).

6. Electric heating device according to any one of the preceding claims, **characterized in that** a gap (92) which permits a bypass flow (B) is formed between a longitudinal side wall (16) of the housing (2), which delimits the circulation chamber (14), and the heating rib (22), opposite to the flow channel (90).

7. Electric heating device according to any one of the preceding claims, **characterized in that** the heating rib (22) and/or at least a longitudinal side wall (16) which delimits the circulation chamber (14) of the housing (2) comprises, at a side opposite to the flow channel (90), a web (108, 110) which extends between the heating rib (22) and the longitudinal side wall (16).

8. Electric heating device according to claim 7, **characterized in that** the housing base (4) comprises a web (110) departing from the bottom (100), that the heating rib (22) comprises a web (108) departing from the partition wall (12), and that the web (110) departing from the bottom (100) ends at about the same height as the web (108) departing from the partition wall (12).

9. Electric heating device according to any one of claims 4 to 8, **characterized in that** a bottom gap (103) which permits a bottom bypass flow (BB) is formed between a free end of the heating rib (22) and a bottom (100) of the housing base (4).

10. Electric heating device according to claim 9, **characterized in that** a cross rib (102) which projects from the bottom (100) and extends in parallel with the heating ribs (22) is provided between neighboring heating ribs (22).

11. Electric heating device according to claim 10, **characterized in that** a longitudinal rib (94, 98) which projects from at least one of the side walls (16, 18) and/or the dividing wall (20) is provided between neighboring heating ribs (22).

## Revendications

1. Dispositif de chauffage électrique, notamment pour échauffer un fluide de mise en température dans un véhicule automobile, comprenant un boitier (2), qui comporte des raccords de branchement de tube (10) pour le branchement de tubes véhiculant le fluide de mise en température, et qui enferme une chambre de circulation (14) dans laquelle s'engagent des nervures de chauffage (22) pourvues chacune respectivement d'un évidement (24) en forme de U s'ouvrant en direction d'un compartiment de raccordement (30) unitaire, séparé de la chambre de circulation (14) par une paroi de séparation (12) prévue dans la zone des extrémités ouvertes des évidements (24) en forme de U, dispositif de chauffage
dans lequel les nervures de chauffage (22) s'étendent sensiblement dans un plan Y-Z et sont prévues, le long d'un axe X prévu orthogonalement audit plan, de manière successive et décalée les unes par rapport aux autres et sont agencées de façon alternée proche de la paroi, de manière à former ainsi dans la chambre de circulation (14) un canal d'écoulement (90) cheminant en forme de méandres, et
dans lequel les nervures de chauffage (22) et des parois (16, 18, 20) du boitier (2) entourant la chambre de circulation (14), sont prévues de manière à ce que le canal d'écoulement (90) prédéfinisse un écoulement principal (H) du fluide s'étendant uniquement dans le plan X-Y entre les raccords de branchement de tubes (10),
**caractérisé en ce que** le boitier (2) forme au moins deux chambres de circulation partielles (14a, 14b), qui sont séparées mutuellement par une paroi de cloisonnement (20) s'étendant sensiblement dans le plan X-Z.

2. Dispositif de chauffage électrique selon la revendication 1, **caractérisé en ce que** le boitier (2) comporte des embouts de raccordement (10) s'étendant dans la direction X et définissant les raccords de branchement de tube (10), et qui sont agencés sur la même paroi latérale (8) du boitier (2).

3. Dispositif de chauffage électrique selon la revendication 1 ou la revendication 2, **caractérisé en ce que** la paroi de cloisonnement (20) forme, sur un côté opposé au dit au moins un raccord de branchement de tube (10), un passage d'écoulement (96) prévu au voisinage d'une paroi (16) entourant la chambre de circulation (14).

4. Dispositif de chauffage électrique selon l'une des revendications précédentes, **caractérisé en ce que** la chambre de circulation (14) est entourée par une partie inférieure de boitier (4) en forme de cuve en matière plastique, qui est fermée de manière étanche par un couvercle de boitier (6), qui forme d'un seul tenant les nervures de chauffage (22) et est réalisé en un matériau conduisant bien la chaleur.

5. Dispositif de chauffage électrique selon la revendication 4, **caractérisé en ce que** la partie inférieure de boitier (4) forme d'un seul tenant la paroi de cloisonnement (20) et des embouts de raccordement (10) définissant les raccords de branchement de tube (10).

6. Dispositif de chauffage électrique selon l'une des revendications précédentes, **caractérisé en ce qu'**entre une paroi latérale longitudinale (16) du boitier (2), qui délimite la chambre de circulation (14), et la nervure de chauffage (22), est formé, à l'opposé du canal d'écoulement (90), un interstice (92) permettant un écoulement en dérivation (B).

7. Dispositif de chauffage électrique selon l'une des revendications précédentes, **caractérisé en ce que** la nervure de chauffage (22) et/ou au moins une paroi latérale longitudinale (16) délimitant la chambre de circulation (14) du boitier (2), présente sur un côté opposé au canal d'écoulement (90), une ailette (108, 110) qui s'étend entre la nervure de chauffage (22) et la paroi latérale longitudinale (16).

8. Dispositif de chauffage électrique selon la revendication 7, **caractérisé en ce que** la partie inférieure de boitier (4) présente une ailette (110) issue du fond (100), **en ce que** la nervure de chauffage (22) présente une ailette (108) issue de la paroi de séparation (12), et **en ce que** l'ailette (110) issue du fond (100) se termine environ à la même hauteur que l'ailette (108) issue de la paroi de séparation (12).

9. Dispositif de chauffage électrique selon l'une des revendications 4 à 8, **caractérisé en ce qu'**entre une extrémité libre de la nervure de chauffage (22) et un fond (100) de la partie inférieure de boitier (4), est formé un interstice de fond (103) autorisant un écoulement en dérivation de fond (BB).

10. Dispositif de chauffage électrique selon la revendication 9, **caractérisé en ce qu'**entre des nervures de chauffage (22) voisines, est prévue une nervure transversale (102) faisant saillie du fond (100) et s'étendant parallèlement aux nervures de chauffage (22).

11. Dispositif de chauffage électrique selon la revendication 10, **caractérisé en ce qu'**entre des nervures de chauffage (22) voisines, est prévue une nervure longitudinale (94, 98) faisant saillie d'au moins l'une des parois latérales (16, 18) et/ou de la paroi de cloisonnement (20).
